# EUROPÄISCHE PATENTSCHRIFT

(11) **EP 1 546 264 B1**
(45) Veröffentlichungstag und Bekanntmachung des Hinweises auf die Patenterteilung: **14.04.2010**
(21) Anmeldenummer: 03798159.4
(22) Anmeldetag: 12.09.2003
(51) Int. Cl.: C09B 67/46, D06P 1/613

(54) **FESTE PIGMENTZUBEREITUNGEN, ENTHALTEND OBERFLÄCHENAKTIVE ADDITIVE AUF BASIS VON ALKOXYLIERTEN BISPHENOLEN**
SOLID PIGMENT PREPARATIONS COMPRISING SURFACE ACTIVE ADDITIVES BASED ON ALKOXYLATED BISPHENOLS
PREPARATION DE COLORANTS SOLIDES, CONTENANT DES ADDITIFS TENSIOACTIFS SUR LA BASE DE BISPHENOLS ALCOXYLES

(30) Priorität: 24.09.2002 DE 10244683
(43) Veröffentlichungstag der Anmeldung: 29.06.2005
(73) Patentinhaber: BASF SE, 67056 Ludwigshafen (DE)
(72) Erfinder: REISACHER, Hansulrich, 67133 Maxdorf (DE); KLUGE, Michael, 67071 Ludwigshafen (DE)
(86) Internationale Anmeldenummer: PCT/EP2003/010151
(87) Internationale Veröffentlichungsnummer: WO 2004/029159

(56) Entgegenhaltungen:
- EP-A- 0 013 576
- EP-A- 0 655 527
- EP-A- 1 103 173
- WO-A-02/068504
- DE-A- 2 730 233

## Beschreibung

Die vorliegende Erfindung betrifft feste Pigmentzubereitungen, enthaltend als wesentliche Bestandteile
(A) 60 bis 90 Gew.-% mindestens eines Pigments und
(B) 10 bis 40 Gew.-% mindestens eines oberflächenaktiven Additivs aus der Gruppe der Umsetzungsprodukte von Alkylenoxiden mit einem Bisphenol der allgemeinen Formel I 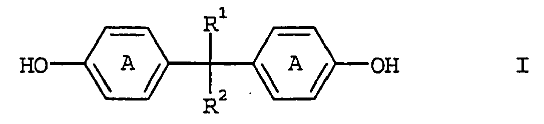 in der die Ringe A jeweils ein- oder zweifach durch C₁-C₈-Alkyl, Phenyl oder Phenyl-C₁-C₈-alkyl substituiert sein können und R¹ und R² methyl bedeuten.

Weiterhin betrifft die Erfindung die Herstellung dieser Pigmentzubereitungen und ihre Verwendung zum Einfärben von hochmolekularen organischen und anorganischen Materialien.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es bestand Bedarf an neuen Pigmentzubereitungen, die in ihren koloristischen Eigenschaften und der Dispergierbarkeit den flüssigen Präparationen vergleichbar sind, jedoch nicht die genannten Zusätze erfordern und leichter zu handhaben sind. Durch einfaches Trocknen der flüssigen Präparationen können jedoch keine festen Pigmentzubereitungen erhalten werden, die vergleichbare Anwendungseigenschaften aufweisen.

In der DE-A-199 05 269 werden feste Pigmentzubereitungen beschrieben, die Dispergiermittel auf Basis gegebenenfalls ionisch modifizierter Phenol/Styrol-Polyglykolether oder Mischungen von ethoxyliertem Ricinusöl mit untergeordneten Mengen von diesen Ethern oder von Phosphonsäureestern und zusätzlich stets einen Verdicker auf Basis von gegebenenfalls teilhydriertem Polyvinylalkohol oder von anionischen Polyhydroxyverbindungen enthalten und zur Pigmentierung von wasserbasierenden Anwendungsmedien eingesetzt werden.

Aus den EP-A-84 645 und 403 917 sind hochkonzentrierte, feste Pigmentzubereitungen für die Pigmentierung von wäßrigen, alkoholischen und wäßrig-alkoholischen Lacken und Druckfarben bekannt, die bis zu 30 Gew.-% eines Additivs auf der Basis von Umsetzungsprodukten von mindestens zweiwertigen Aminen mit Propylenoxid und Ethylenoxid enthalten.

In den US-A-4 056 402 und 4 127 422 werden trockene, nicht staubende Pigmentzubereitungen für wasserbasierende Beschichtungssysteme beschrieben. Diese Pigmentzubereitungen enthalten jedoch neben nichtionischen Dispergiermitteln auf Basis von Polyethylenglykolmonophenylethern als wesentlichen Bestandteil mindestens 10 Gew.-% wasserlösliche Celluloseether bzw. wasserdispergierbare Polyvinylverbindungen und unterscheiden sich daher von den erfindungsgemäßen Pigmentzubereitungen.

Weiterhin sind aus der EP-A-1 081 195 granuläre Pigmentzubereitungen für die Einfärbung von Kunststoffen bekannt, die nichtionische Polyethylenwachse als Additive enthalten. Diese Pigmentzubereitungen werden durch Inkonktaktbringen der Pigmente mit den Wachsen beim Lösungsmittelfinish und Sprühtrocknung hergestellt. Dieses Herstellungsverfahren ist jedoch nur für organische Pigmente anwendbar, die in organischen Lösungsmitteln gefinisht werden.

Schließlich ist in den nicht vorveröffentlichten DE-A-102 04 304 sowie 102 04 583, 102 27 657 und 102 28 199 der Einsatz von festen Pigmentzubereitungen, die nichtionische oberflächenaktive Additive auf der Basis von Polyethern bzw. Mischungen dieser Additive mit anionischen oberflächenaktiven Additiven auf Basis entsprechend modifizierter Polyether enthalten, beschrieben.

Der Erfindung lag die Aufgabe zugrunde, feste Pigmentzubereitungen bereitzustellen, die sich durch insgesamt vorteilhafte Anwendungseigenschaften, insbesondere hohe Farbstärke und besonders leichte Dispergierbarkeit (Einrührbarkeit, "Stir-in"-Verhalten) in Anwendungsmedien verschiedenster Art sowie hohe Lagerstabilität, auszeichnen.

Demgemäß wurden die eingangs definierten Pigmentzubereitungen gefunden.

Außerdem wurde ein Verfahren zur Herstellung der Pigmentzubereitungen gefunden, welches dadurch gekennzeichnet ist, daß man das Pigment (A) zunächst in wäßriger, zumindest einen Teil des Additivs (B) enthaltenden Suspension einer Naßzerkleinerung unterwirft und die Suspension dann, gegebenenfalls nach Zugabe der restlichen Menge Additiv (B), trocknet.

Weiterhin wurde ein Verfahren zur Einfärbung von hochmolekularen organischen und anorganischen Materialen gefunden, welches dadurch gekennzeichnet ist, daß man die Pigmentzubereitungen durch Einrühren oder Schütteln in diese Materialien einträgt.

Die erfindungsgemäßen Pigmentzubereitungen enthalten als wesentliche Bestandteile das Pigment (A) und das oberflächenaktive Additiv (B).

Als Komponente (A) können in den erfindungsgemäßen Pigmentzubereitungen organische oder anorganische Pigmente enthalten sein. Selbstverständlich können die Pigmentzubereitungen auch Mischungen verschiedener organischer oder verschiedener anorganischer Pigmente oder Mischungen von organischen und anorganischen Pigmenten enthalten.

Die Pigmente liegen in feinteiliger Form vor. Die Pigmente haben dementsprechend üblicherweise mittlere Teilchengrößen von 0,1 bis 5 µm, insbesondere 0,1 bis 3 µm und vor allem 0,1 bis 1 µm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente und die üblicherweise als Füllstoffe eingesetzten anorganischen Pigmente sein.

Im folgenden seien als Beispiele für geeignete organische Farbpigmente genannt:

| | |
|---|---|
| - Monoazopigmente: | C.I. Pigment Brown 25; |
| | C.I. Pigment Orange 5, 13, 36, 38, 64 und 67; |
| | C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, |
| | 191:1, 208, 210, 245, 247 und 251; |
| | C.I. Pigment Yellow 1, 3, 62, 65, 73, 74, 97, 120, 151, 154, 168, 181, 183 und 191; |
| | C.I. Pigment Violet 32; |
| | |
| - Disazopigmente: | C.I. Pigment Orange 16, 34, 44 und 72; |
| | C.I. Pigment Red 144, 166, 214, 220, 221 und 242; |
| | C.I. Pigment Yellow 12, 13, 14, 16, 17, 81, 83, 106, 113, 126, 127, 155, 174, 176, 180 und 188; |
| | |
| - Disazokondensationspigmente: | C.I. Pigment Yellow 93, 95 und 128; |
| | C.I. Pigment Red 144, 166, 214, 220, 242 und 262; |
| | C.I. Pigment Brown 23 und 41; |
| | |
| - Anthanthronpigmente: | C.I. Pigment Red 168; |
| | |
| - Anthrachinonpigmente: | C.I. Pigment Yellow 147, 177 und 199; |
| | C.I. Pigment Violet 31; |
| | |
| - Anthrapyrimidinpigmente: | C.I. Pigment Yellow 108; |
| - Chinacridonpigmente: | C.I. Pigment Orange 48 und 49; |
| | C.I. Pigment Red 122, 202, 206 und 209; |
| | C.I. Pigment Violet 19; |
| | |
| - Chinophthalonpigmente: | C.I. Pigment Yellow 138; |
| | |
| - Diketopyrrolopyrrolpigment: | C.I. Pigment Orange 71, 73 und 81; |
| | C.I. Pigment Red 254, 255, 264, 270 und 272; |
| | |
| - Dioxazinpigmente: | C.I. Pigment Violet 23 und 37; |
| | C.I. Pigment Blue 80; |
| | |
| - Flavanthronpigmente: | C.I. Pigment Yellow 24; |
| | |
| - Indanthronpigmente: | C.I. Pigment Blue 60 und 64; |
| | |
| - Isoindolinpigmente: | C.I. Pigment Orange 61 und 69; |
| | C.I. Pigment Red 260; |
| | C.I. Pigment Yellow 139 und 185; |
| | |
| - Isoindolinonpigmente: | C.I. Pigment Yellow 109, 110 und 173; |
| | |
| - Isoviolanthronpigmente: | C.I. Pigment Violet 31; |
| | |
| - Metallkomplexpigmente: | C.I. Pigment Red 257; |
| | C.I. Pigment Yellow 117, 129, 150, 153 und 177; |
| | C.I. Pigment Green 8; |
| | |
| - Perinonpigmente: | C.I. Pigment Orange 43; |
| | C.I. Pigment Red 194; |
| | |
| - Perylenpigmente: | C.I. Pigment Black 31 und 32; |
| | C.I. Pigment Red 123, 149, 178, 179, 190 und 224; |
| | C.I. Pigment Violet 29; |
| | |
| - Phthalocyaninpigmente: | C.I. Pigment Blue 15, 15:1, 15:2, 15:3, 15:4, 15:6 und 16; |
| | C.I. Pigment Green 7 und 36; |
| | |
| - Pyranthronpigmente: | C.I. Pigment Orange 51; |
| | C.I. Pigment Red 216; |
| | |
| - Pyrazolochinazolonpigmente: | C.I. Pigment Orange 67; |
| | C.I. Pigment Red 251; |
| | |
| - Thioindigopigmente: | C.I. Pigment Red 88 und 181; |
| | C.I. Pigment Violet 38; |
| | |
| - Triarylcarboniumpigmente: | C.I. Pigment Blue 1, 61 und 62; |
| | C.I. Pigment Green 1; |
| | C.I. Pigment Red 81, 81:1 und 169; |
| | C.I. Pigment Violet 1, 2, 3 und 27; |
| | |
| - C.I. Pigment Black 1 (Anilinschwarz); | |
| | |
| - C.I..Pigment Yellow 101 (Aldazingelb); | |
| | |
| - C.I. Pigment Brown 22. | |
| | |
| Geeignete anorganische Farbpigmente sind z.B. : | |
| | |
| - Weißpigmente: | Titandioxid (C.I. Pigment White 6), Zinkweiß, Farbenzinkoxid; Zinksulfid, Lithopone; |
| | |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| | |
| - Buntpigmente : | Chromoxid, Chromoxidhydratgrün; Chromgrün (C.I. Pigment Green 48); Cobaltgrün (C.I. Pigment Green 50); Ultramaringrün; |
| | |
| | Kobaltblau (C.I. Pigment Blue 28 und 36; C.I. Pigment Blue 72); Ultramarinblau; Manganblau; |
| | |
| | Ultramarinviolett; Kobalt- und Manganviolett; |
| | |
| | Eisenoxidrot (C.I. Pigment Red 101); |
| | Cadmiumsulfoselenid (C.I. Pigment Red 108); Cersulfid (C.I. Pigment Red 265); |
| | Molybdatrot (C.I. Pigment Red 104); |
| | Ultramarinrot; |
| | |
| | Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange; |
| | |
| | Cersulfid (C.I. Pigment Orange 75); |
| | Eisenoxidgelb (C.I. Pigment Yellow 42); |
| | Nickeltitangelb (C.I. Pigment Yellow 53; |
| | C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); |
| | Chromgelb (C.I. Pigment Yellow 34); |
| | Bismutvanadat (C.I. Pigment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Als Komponente (B) enthalten die erfindungsgemäßen Pigmentzubereitungen mindestens ein oberflächenaktives Additiv aus der Gruppe der Umsetzungsprodukte von Alkylenoxiden mit einem Bisphenol der Formel I.

Bevorzugt handelt es sich bei dem Bisphenol I um unsubstituiertes Bisphenol A (R¹ = R² = -CH₃). Weiterhin ist substituiertes Bisphenol A besonders geeignet, vor allem mit Styrol umgesetztes Bisphenol A; das in den ortho-Positionen zu den beiden OH-Gruppen durch insgesamt 4 Phenyl-1-ethylreste substituiert ist.

Bei den Alkylenoxiden handelt es sich bevorzugt um C₂-C₄-Alkylenoxide, besonders bevorzugt um Ethylenoxid und Propylenoxid.

Das Bisphenol I kann mit nur einem oder auch mit verschiedenen Alkylenoxiden umgesetzt sein. Werden dabei Polymere gebildet, so können bei Einsatz verschiedener Alkylenoxide statistische Polymere oder vorzugsweise Blockcopolymere gebildet werden. Bevorzugt wird das Bisphenol I dabei zunächst mit Propylenoxid und dann mit Ethylenoxid umgesetzt, die Umsetzung in anderer Reihenfolge ist aber auch möglich.

In der Regel enthalten die Additive (B) 4 bis 150 mol Alkylenoxid je mol Bisphenol I.

Als oberflächenaktive Additive (B) sind die nichtionischen Alkylenoxidaddukte selbst wie auch die durch Umsetzung mit Schwefelsäure oder Sulfonsäure erhaltenen entsprechenden sauren Ester und insbesondere deren wasserlösliche Salze, insbesondere Alkalimetallsalze, vor allem Natriumsalze, und Ammoniumsalze, geeignet. Derartige anionische Additive (B) basieren insbesondere auf dem oben beschriebenen phenylethylsubstituierten Bisphenol A-Derivat.

Bevorzugt enthalten die erfindungsgemäßen Pigmentzubereitungen die Additive (B) in nichtionischer Form.

Als Additive (B) besonders bevorzugt sind die Umsetzungsprodukte von Bisphenol A mit Propylenoxid und vorzugsweise mit Ethylenoxid, die einen Gehalt von 4 bis 150 mol, insbesondere 4 bis 100 mol und vor allem 4 bis 50 mol, des Alkylenoxids je mol Bisphenol A aufweisen.

Derartige oberflächenaktive Additive sind bekannt und im Handel z.B. unter den Namen Pluriol^{®} (BASF) und Atlas^{®} (Uniquema) erhältlich.

Die erfindungsgemäßen Pigmentzubereitungen enthalten 60 bis 90 Gew.-%, vorzugsweise 70 bis 85 Gew.-%, der Komponente (A) und 10 bis 40 Gew.-%, bevorzugt 15 bis 30 Gew.-%, der Komponente (B).

Die erfindungsgemäßen Pigmentzubereitungen können vorteilhaft nach dem ebenfalls erfindungsgemäßen Herstellungsverfahren erhalten werden, indem man das Pigment (A) zunächst in wäßriger, zumindest einen Teil des Additivs (B) enthaltenden Suspension einer Naßzerkleinerung unterwirft und die Suspension dann, gegebenenfalls nach Zugabe der restlichen Menge Additiv (B), trocknet.

Das Pigment (A) kann bei dem erfindungsgemäßen Verfahren als trockenes Pulver oder in Form eines Preßkuchens eingesetzt werden.

Bei dem eingesetzten Pigment (A) handelt es sich vorzugsweise um ein gefinishtes Produkt, d.h. die Primärkorngröße des Pigments ist bereits auf den für die Anwendung gewünschten Wert eingestellt. Dieser Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so daß die anfallenden Pigmentsuspensionen direkt beim erfindungsgemäßen Verfahren eingesetzt werden können.

Da das gefinishte Pigment (A) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Bei der Naßzerkleinerung sollte zumindest ein Teil des in der fertigen Pigmentzubereitung enthaltenen Additivs (B) anwesend sein, vorzugsweise setzt man die gesamte Menge Additiv (B) vor der Naßzerkleinerung zu.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen Pigmentzubereitungen gezielt gesteuert werden.

Bei Sprüh- und Wirbelschichtgranulierung können grobteilige Granulate mit mittleren Korngrößen von 50 bis 5000 µm, insbesondere 100 bis 1000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockner und beim Eindampfen mit anschließender Mahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Das Additiv (B) schmilzt bei den Trocknungstemperaturen auf und führt so zur Bildung eines weitgehend kugelförmigen Granulats mit besonders glatter Oberfläche (BET-Werte von in der Regel ≤ 15 m²/g, insbesondere ≤ 10 m²/g).

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt bevorzugt bei < 2 Gew.-%.

Die erfindungsgemäßen Pigmentzubereitungen zeichnen sich bei der Anwendung durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden.
Dies gilt insbesondere für die grobteiligen Pigmentgranulate, die die bevorzugte Ausführungsform der erfindungsgemäßen Pigmentzubereitungen darstellen.

Im Vergleich zu flüssigen Pigmentpräparationen weisen die erfindungsgemäßen Pigmentzubereitungen zudem folgende Vorteile auf: Sie haben einen höheren Pigmentgehalt. Während flüssige Präparationen bei der Lagerung zu.Viskositätsänderungen neigen und mit Konservierungsmitteln und Mitteln zur Erhöhung der Gefrier- und/oder Eintrocknungsbeständigkeit versetzt werden müssen, zeigen die erfindungsgemäßen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen Pigmentzubereitungen eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Gewünschtenfalls können die Zubereitungen zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentzubereitungen in Glykolen oder sonstigen in der Lackindustrie üblichen Lösungsmitteln, wie Methoxypropylacetat, verwendet werden, um auf wäßrige Systeme abgestimmte Pigmentzubereitungen mit kohlenwasserstoffbasierenden Systemen oder Systemen auf Nitrocellulosebasis verträglich zu machen.

Als Beispiele für Materialien, die mit den erfindungsgemäßen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußen- als auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentgranulat Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Besonders vorteilhaft können die erfindungsgemäßen Pigmentzubereitungen als Mischkomponenten in Farbmisch- oder Abtönsystemen eingesetzt werden. Aufgrund ihres Stir-in-Verhaltens können sie dabei direkt als Feststoff zum Einsatz kommen. Gewünschtenfalls können sie jedoch auch zunächst in Basisfarben, Mischlacken und Abtönfarben (insbesondere in Farben mit hohem Feststoffgehalt, "HS-Farben") oder noch höher pigmentierte Abtönpasten überführt werden, die dann die Komponenten des Mischsystems darstellen. Die Einstellung des gewünschten Farbtons und damit die Mischung der Farbkomponenten kann visuell über ein System von Farbkarten in möglichst vielen Farbtonabstufungen, die auf Farbstandards, wie RAL, BS und NCS, basieren, erfolgen oder bevorzugt computergesteuert vorgenommen werden, wodurch eine unbegrenzte Anzahl von Farbtönen zugänglich ist ("computer color matching").

Außerdem sind die erfindungsgemäßen Pigmentzubereitungen hervorragend geeignet zur Einfärbung von Kunststoffen und Pulverlacken. Die Einarbeitung in die Kunststoffe und Pulverlacke kann dabei durch Extrudieren, Walzen, Kneten oder Mahlen erfolgen.

### Beispiele

Herstellung und Prüfung von erfindungsgemäßen Pigmentzubereitungen in Granulatform

Die Herstellung der Pigmentgranulate erfolgte, indem eine Suspension von x kg gefinishtem Pigment (A) und y kg Additiv (B) in 150 kg Wasser in einer Kugelmühle auf einen d₅₀-Wert von < 1 µm gemahlen und dann in einem Sprühturm mit Einstoffdüse (Gaseintrittstemperatur 165°C, Gasaustrittstemperatur 70°C) sprühgranuliert wurde.

Als Additive wurden dabei eingesetzt:

| | |
|---|---|
| B1: | Ethoxyliertes Bisphenol A (15 mol EO/mol Bisphenol A). |
| | |
| B2: | Halbsulfatiertes ethoxyliertes tetraphenylethylsubstituiertes Bisphenol A (100 mol EO/mol Bisphenol A; US-A-4 218 218: oberflächenaktives Mittel 13). |

Die Bestimmung der Farbstärke der Pigmentgranulate erfolgte farbmetrisch in der Weißaufhellung (Angabe der Färbeäquivalente FAE, DIN 55986) in einer wasserbasierenden Dispersionsfarbe. Dazu wurde eine Mischung von jeweils 1,25 g Pigmentgranulat und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wurde dann mit einer 100 µm-Spiralrakel auf schwarz/weißen Prüfkarton aufgezogen und 30 min getrocknet.

Den jeweils analogen Dispersionsfarben, die mit handelsüblichen wäßrigen Präparationen der Pigmente hergestellt wurden, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

Zusätzlich wurde die Farbstärke nach fünftägiger Lagerung bei 40°C überprüft.

In der folgenden Tabelle sind die Zusammensetzungen der hergestellten Pigmentgranulate sowie die jeweils erhaltenen FAE-Werte aufgeführt.

**Tabelle**

| Bsp | Pigment | | | Additiv | | FAE | |
|---|---|---|---|---|---|---|---|
| | | (A) | x kg | (B) | y kg | sofort | 5 d/40°C |
| 1 | P.V. | 23 | 78 | B1 | 22 | 100 | 100 |
| 2 | P.V. | 23 | 78 | B2 | 22 | 100 | 100 |
| 3 | P.R. | 122 | 75 | B1 | 25 | 98 | 99 |
| 4 | P.R. | 122 | 75 | B2 | 25 | 100 | 100 |
| 5 | P.Y. | 74 | 77 | B1 | 23 | 100 | 100 |
| 6 | P.Y. | 74 | 77 | B2 | 23 | 105 | 105 |

## Patentansprüche

1. Feste Pigmentzubereitungen, enthaltend als wesentliche Bestandteile
(A) 60 bis 90 Gew.-% mindestens eines Pigments und
(B) 10 bis 40 Gew.-% mindestens eines oberflächenaktiven Additivs aus der Gruppe der Umsetzungsprodukte von Alkylenoxiden mit einem Bisphenol der allgemeinen Formel I 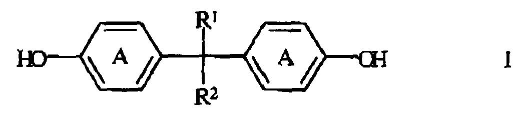 in der die Ringe A jeweils ein- oder zweifach durch C₁-C₈-Alkyl, Phenyl oder Phenyl-C₁-C₈-alkyl substituiert sein können und R¹ und R² Methyl bedeuten, oder die sauren Ester der Umsetzungsprodukte mit Schwefelsäure oder Sulfonsäure oder deren Salze.

2. Pigmentzubereitungen nach Anspruch 1, die als Komponente (B) mindestens ein Additiv aus der Gruppe der umsetzungsprodukte von Ethylenoxid und/oder Propylenoxid mit Bisphenol A und phenylethylsubstituiertem Bisphenol A, der sauren Schwefelsäure- und Sulfonsäureester dieser Alkylenoxidverbindungen und der Salze dieser Ester enthalten.

3. Pigmentzubereitungen nach Anspruch 1 oder 2, die als Komponente (B) mindestens ein nichtionisches oberflächenaktives Additiv auf der Basis von Umsetzungsprodukten von Bisphenol A mit 4 bis 150 mol Ethylenoxid/mol enthalten.

4. Pigmentzubereitungen nach den Ansprüchen 1 bis 3, die in Form von Granulaten mit einer mittleren Korngröße von 50 bis 5000 µm und einer BET-Oberfläche von ≤ 15 m²/g vorliegen.

5. Verfahren zur Herstellung von Pigmentzubereitungen gemäß den Ansprüchen 1 bis 4, **dadurch gekennzeichnet, daß** man das Pigment (A) zunächst in wäßriger, zumindest einen Teil des Additivs (B) enthaltender Suspension einer Naßzerkleinerung unterwirft und die Suspension dann, gegebenenfalls nach Zugabe der restlichen Menge Additiv (B), trocknet.

6. Verfahren zur Einfärbung von hochmolekularen organischen und anorganischen Materialen, **dadurch gekennzeichnet, daß** man Pigmentzubereitungen gemäß den Ansprüchen 1 bis 4 durch Einrühren oder Schütteln in diese Materialien einträgt.

7. Verfahren nach Anspruch 6, **dadurch gekennzeichnet, daß** man Lacke, Anstrichmittel. Druckfarben, Tinten und Beschichtungssysteme einfärbt, die als flüssige Phase Wasser, organische Lösungsmittel oder Mischungen von Wasser und organischen Lösungsmitteln enthalten.

8. Verfahren zur Einfärbung von hochmolekularen organischen und anorganischen Materialien unter Verwendung von Farbmischsystemen, **dadurch gekennzeichnet, daß** man Pigmentzubereitungen gemäß den Ansprüchen 1 bis 4 als Mischkomponenten einsetzt.

9. Verfahren zur Einfärbung von Kunststoffen, **dadurch gekennzeichnet, daß** man Pigmentzubereitungen gemäß den Ansprüchen 1 bis 4 durch Extrudieren, walzen, Kneten oder Mahlen in die Kunststoffe einarbeitet.

10. Verfahren zur Einfärbung von Pulverlacken, **dadurch gekennzeichnet, daß** man Pigmentzubereitungen gemäß den Ansprüchen 1 bis 4 durch Extrudieren, Walzen, Kneten oder Mahlen in die Pulverlacke einarbeitet.

## Claims

1. Solid pigment preparations comprising as essential constituents
A) from 60 to 90% by weight of at least one pigment and
B) from 10 to 40% by weight of at least one surface-active additive from the group of the reaction products of alkylene oxides with a bisphenol of the general formula I 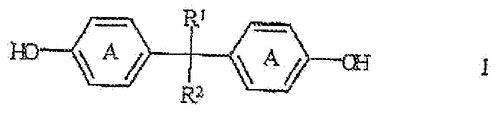
where the rings A may each be substituted by one or two substituents selected from the group consisting of C₁-C₈-alkyl, phenyl and phenyl-C₁-C₈-alkyl and R¹ and R² are each methyl, or the acidic esters of the reaction products with sulfuric acid or sulfonic acid or salts thereof.

2. Pigment preparations according to claim 1, wherein component (B) comprises at least one additive from the group of the reaction products of ethylene oxide and/or propylene oxide with bisphenol A and phenylethyl-substituted bisphenol A, the acidic sulfuric and sulfonic esters of these alkylene oxide compounds and the salts of these esters.

3. Pigment preparations according to claim 1 or 2, wherein component (B) comprises at least one nonionic surface-active additive based on reaction products of bisphenol A with from 4 to 150 mol of ethylene oxide/mol.

4. Pigment preparations according to any of claims 1 to 3, in the form of granules having an average particle size from 50 to 5000 µm and a BET surface area ≤ 15 m²/g.

5. A process for producing pigment preparations according to any of claims 1 to 4, which comprises wet-comminuting the pigment (A) in aqueous suspension in the presence of some or all of additive (B) and then drying the suspension, if necessary after the rest of additive (B) has been added.

6. A process for pigmenting macromolecular organic and inorganic materials, which comprises introducing the pigment preparations according to any of claims 1 to 4 into these materials by stirring or shaking.

7. The process according to claim 6, for pigmenting coatings, paints, printing inks, liquid inks, and finish systems where the liquid phase comprises water, organic solvent or mixtures of water and organic solvents.

8. A process for pigmenting macromolecular organic and inorganic materials using color-mixing systems, which comprises using pigment preparations according to any of claims 1 to 4 as mixing components.

9. A process for pigmenting plastics, which comprises incorporating pigment preparations according to any of claims 1 to 4 into the plastics by extruding, rolling, kneading or milling.

10. A process for pigmenting powder coatings, which comprises incorporating pigment preparations according to any of claims 1 to 4 into the powder coatings by extruding, rolling, kneading or milling.

## Revendications

1. Préparations de pigments solides, contenant comme composants essentiels
(A) de 60 à 90 % en poids d'au moins un pigment et
(B) de 10 à 40 % en poids d'au moins un additif tensioactif choisi dans le groupe des produits de réaction d'oxydes d'alkylène avec un bisphénol de formule générale I 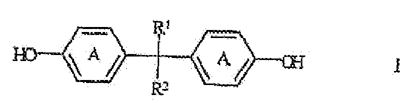
dans laquelle les cycles A peuvent être substitués chacun une ou deux fois par des groupes alkyle en C₁-C₈, phényle ou phényl-alkyle(C₁-C₈) et R¹ et R² représentent le groupe méthyle, ou des esters acides des produits de réaction avec l'acide sulfurique ou l'acide sulfonique ou leurs sels.

2. Préparations de pigments selon la revendication 1, qui contiennent en tant que composant (B) au moins un additif choisi dans le groupe des produits de réaction de l'oxyde d'éthylène et/ou de l'oxyde de propylène avec le bisphénol A et le bisphénol A substitué par phényléthyle, des esters acides de ces composés d'oxyde d'alkylène avec l'acide sulfurique et l'acide sulfonique et des sels de ces esters.

3. Préparations de pigments selon la revendication 1 ou 2, qui contiennent en tant que composant (B) au moins un additif tensioactif non ionique à base de produits de réaction du bisphénol A avec 4 à 150 moles d'oxyde d'éthylène par mole.

4. Préparations de pigments selon les revendications 1 à 3, qui se trouvent sous forme de produits granulés ayant une taille moyenne de grain de 50 à 5 000 µm et une surface BET de ≤ 15 m²/g.

5. Procédé pour la production de préparations de pigments selon les revendications 1 à 4, **caractérisé en ce que** d'abord on soumet le pigment (A) à une fragmentation par voie humide en suspension aqueuse contenant au moins une partie de l'additif (B) et la suspension est ensuite séchée, éventuellement après addition de la quantité restante de l'additif (B).

6. Procédé pour la coloration de matériaux inorganiques et organiques de masse moléculaire élevée, **caractérisé en ce qu'**on introduit dans ces matériaux des préparations de pigments selon les revendications 1 à 4, par délayage ou secouement.

7. Procédé selon la revendication 6, **caractérisé en ce qu'**on colore des peintures, des enduits, des encres d'imprimerie, des encres et des systèmes de revêtement, qui contiennent en tant que phase liquide de l'eau, des solvants organiques ou des mélanges d'eau et de solvants organiques.

8. Procédé pour la coloration de matériaux inorganiques et organiques de masse moléculaire élevée, avec utilisation de systèmes colorants, **caractérisé en ce qu'**on utilise des préparations de pigments selon les revendications 1 à 4 en tant que composants de mélange.

9. Procédé pour la coloration de matières plastiques, **caractérisé en ce qu'**on incorpore dans les matières plastiques des préparations de pigments selon les revendications 1 à 4, par extrusion, laminage, malaxage ou broyage.

10. Procédé pour la coloration de peintures en poudre, **caractérisé en ce qu'**on incorpore dans les peintures en poudre des préparations de pigments selon les revendications 1 à 4, par extrusion, laminage, malaxage ou broyage.
